# EUROPÄISCHE PATENTSCHRIFT

(11) **EP 3 591 273 B1**
(45) Veröffentlichungstag und Bekanntmachung des Hinweises auf die Patenterteilung: **16.12.2020**
(21) Anmeldenummer: 19164356.8
(22) Anmeldetag: 21.03.2019
(51) Int. Cl.: F16K 31/06

(54) **MAGNETVENTIL**
SOLENOID VALVE
ÉLECTROVANNE

(30) Priorität: 03.04.2018 DE 102018107763
(43) Veröffentlichungstag der Anmeldung: 08.01.2020
(73) Patentinhaber: RAPA Automotive GmbH & Co. KG, 95100 Selb (DE)
(72) Erfinder: Bähr, Sebastian, 95100 Selb (DE); Döhla, Werner, 95100 Selb (DE)
(74) Vertreter: Klunker IP Patentanwälte PartG mbB

(56) Entgegenhaltungen:
- EP-A1- 0 055 518
- DE-A1-102013 106 215
- DE-A1-102013 210 645
- US-A- 4 896 860
- US-B1- 6 386 218

## Beschreibung

Die vorliegende Erfindung betrifft ein elektromagnetisch betätigtes Kolbenschieberventil, beispielsweise für einen Stoßdämpfer eines Fahrzeugs.

Ein elektromagnetisch betätigtes Kolbenschieberventil kann als Drosselventil in einem hydraulischen Stoßdämpfer eines Fahrzeugs eingesetzt werden, um eine Dämpfercharakteristik "hart" oder "weich" einzustellen. Mittels des verstellbaren Drosselventils kann je nach Bestromung der Erregerspule des Ventils der Strömungswiderstand des Ventils und dadurch die Dämpfungswirkung des Gesamtsystems verändert werden. Das Ventil verbindet dabei zwei Dämpferkammern, wobei Druckstöße am Dämpfer eine Fluidverdrängung aus einer Dämpferkammer in die andere Dämpferkammer verursachen. Das Ventil weist üblicherweise eine Durchströmungsrichtung auf, wobei dann an einem Stoßdämpfer jeweils zwei solcher Ventile angebracht sind. Es kommt ein Ventil für die Zugstufe (Ausfahren der Kolbenstange des Stoßdämpfers) und eines für die Druckstufe (Einfahren der Kolbenstange des Stoßdämpfers) zum Einsatz.

Grundsätzlich sind zwei Wirkprinzipien solcher Ventile bekannt. Ein Ventil kann im unbestromten Zustand, d.h. ohne Anliegen eines elektrischen Stroms, geschlossen sein und wird dann als NC-Ventil (NC: "normally closed") bezeichnet. Wenn ein Ventil im unbestromten Zustand offen ist, wird es als NO-Ventil (NO: "normally open") bezeichnet. Darüber hinaus sind auch NO-Ventile mit einer sogenannten Fail-Safe-Stellung bekannt, welche im unbestromten Zustand eine vorgegebene Position zwischen der komplett geschlossenen und der komplett geöffneten Position einnehmen.

Aus der DE 10 2008 035 899 A1 und der DE 10 2013 106 214 A1 sind Magnetventile mit einer Fail-Safe-Stellung bekannt, in der das Ventil teilweise geöffnet ist, d.h. eine Stellung im nicht bestromten Zustand zwischen der maximal geöffneten und geschlossenen Stellung. Dies wird durch einen zweiteiligen Magnetanker erreicht. Wird die Spule des Ventils elektrisch bestromt, werden die beiden Teile des Magnetankers miteinander gekoppelt. Der Magnetanker und damit der Kolben (auch als Schieber bezeichnet) des Ventils kann in die maximal geöffnete Stellung bewegt und dort mit einer Grundbestromung gehalten werden. Bei weiterer Erhöhung des Stroms bewegt sich der Schieber kontinuierlich in Richtung der geschlossenen Stellung.

Hinsichtlich des Aufbaus und der Anordnung des Schiebers und der Durchgangsöffnungen sind ebenfalls verschiedene Prinzipien bekannt. Kolbenschieberventile mit einem axial verlagerbaren Schieber, beispielsweise in Form eines hohlzylindrischen Kolbens, zum Regeln der freien Querschnittsfläche der Durchgangsöffnungen, welcher auf einem Zapfen geführt ist, sind beispielsweise aus der US 4 896 860 A, EP 1 538 366 B1 oder DE 10 2008 015 416 B4 bekannt. Bei diesen Ventilen handelt es sich um NC-Ventile. In dem Magnetventil der DE 10 2012 201 963 B4 ist der Schieber dagegen an seiner Außenseite geführt. Es handelt sich hier um ein NO-Ventil.

Der äußere Aufbau von NC- und NO-Ventilen, d.h. beispielsweise der erforderliche Bauraum und die Schnittstellen bzw. Anschlüsse, ist üblicherweise gleich. Jedoch unterscheiden sich NC- und NO-Ventile in der inneren Konstruktion. Vor allem sind die aufwendigen und funktionsbestimmenden Teile, wie der Schieber und der Ventilkörper mit den Durchgangsöffnungen, unterschiedlich ausgeführt.

Aufgabe der Erfindung ist es daher, ein Magnetventil, insbesondere ein elektromagnetisch betätigtes Kolbenschieberventil bereitzustellen, das es ermöglicht, dass funktionsbestimmende Teile, wie der Schieber und der Ventilkörper mit den Durchgangsöffnungen, sowohl im NC- als auch im NO-Wirkprinzip verwendet werden können.

Die Aufgabe wird gelöst durch ein elektromagnetisch betätigtes Kolbenschieberventil mit den Merkmalen des unabhängigen Anspruchs. Bevorzugte Ausgestaltungen und Weiterbildungen sind in den abhängigen Ansprüchen angegeben.

Ein Kolbenschieberventil gemäß der Erfindung umfasst eine erste und eine zweite Vorspanneinrichtung, welche sich derart an dem Ventilgehäuse abstützen, dass sie in entgegengesetzte Richtungen wirken, wie im Folgenden genauer erläutert werden wird. Bei der ersten und zweiten Vorspanneinrichtung kann es sich insbesondere jeweils um eine Feder, wie eine Schraubenfeder, handeln. Vorteilhaft kann das erfindungsgemäße Kolbenschieberventil in einem Stoßdämpfer für ein Kraftfahrzeug eingesetzt werden. Beispielsweise kann für die Zugstufe und die Druckstufe an jedem Stoßdämpfer ein erfindungsgemäßes Ventil zum Einsatz kommen.

Die erste Vorspanneinrichtung stützt sich derart gegen das Ventilgehäuse ab, dass eine Kraft der ersten Vorspanneinrichtung in eine Öffnungsrichtung wirkt. Die Öffnungsrichtung ist diejenige axiale Richtung, in welcher der Schieber verlagert wird, um den Fluiddurchgang zumindest teilweise freizugeben. Umgekehrt ist die Schließrichtung diejenige axiale Richtung, in welcher der Schieber bewegt wird, um den Fluiddurchgang zu schließen. Die Schließrichtung ist zur Öffnungsrichtung entgegengesetzt. Die zweite Vorspanneinrichtung stützt sich derart gegen das Ventilgehäuse ab, dass eine Kraft der zweiten Vorspanneinrichtung in Schließrichtung wirkt. Die erste und zweite Vorspanneinrichtung sind des Weiteren derart eingerichtet, d.h. beispielsweise hinsichtlich ihrer Federkonstante dimensioniert, dass der Schieber im nicht bestromten Zustand der Spule eine Position einnimmt, in welcher der Fluiddurchgang geschlossen ist. Mit anderen Worten handelt es sich um ein NC-Ventil. Durch Bestromen der Spule ist der Schieber entgegen der Kraft der zweiten Vorspanneinrichtung axial in eine Position verlagerbar, in welcher der Fluiddurchgang zumindest teilweise geöffnet ist.

Vorteilhaft sind die erste und zweite Vorspanneinrichtung derart eingerichtet, dass bei Bestromen der Spule mit einer vorgegebenen Stromstärke, der Betrag der Summe der Kraft der ersten Vorspanneinrichtung und einer durch das elektromagnetische Feld verursachten, auf den Magnetanker wirkenden Kraft den Betrag die Kraft der zweiten Vorspanneinrichtung übersteigt. Dabei ist im unbestromten Zustand der Spule der Betrag der Kraft der zweiten Vorspannfeder größer als der Betrag der Kraft der ersten Vorspannfeder, beispielsweise doppelt so groß. Mit anderen Worten, die zweite Vorspanneinrichtung, welche für die eigentliche NC-Wirkweise des Ventils verantwortlich ist, ist stärker als die erste Vorspanneinrichtung. Die Kraft, die durch Bestromen der Spule auf den Magnetanker wirkt, wirkt in die gleiche Richtung wie die Kraft der ersten Vorspanneinrichtung, so dass die Kraft der stärkeren zweiten Vorspanneinrichtung beim Bestromen der Spule zum Öffnen des Ventils überwunden wird.

Bei dem erfindungsgemäßen Ventil handelt es sich um ein NC-Ventil. Bekannte NC-Ventile weisen üblicherweise nur eine Vorspanneinrichtung auf, welche den Schieber in eine Position drängt, in welcher der Fluiddurchgang geschlossen ist. Wie erwähnt, entspricht diese Vorspanneinrichtung der zweiten Vorspanneinrichtung des erfindungsgemäßen Ventils. Das Vorsehen von zwei einander entgegengesetzten Vorspanneinrichtungen ermöglicht den Einsatz des Schiebers auch in einem NO-Ventil. Hierzu wird einfach die zweite Vorspanneinrichtung weggelassen und der Magnetanker durch einen anderen Magnetanker ersetzt, wie im Folgenden mit Bezug auf den Bausatz genauer erläutert wird. Die funktionsbestimmenden Teile, wie der Schieber und der Ventilkörper mit dem Fluiddurchgang und den Fluidanschlüssen bleiben identisch.

Es können eine Reihe von Vorteilen erreicht werden, wenn die funktionsbestimmenden Hydraulikteile des Ventils für ein NC-Ventil und ein NO-Ventil identisch sind. Beispielsweise muss nur eine Hydraulikbaugruppe für beide Varianten gefertigt werden, was Aufwand und Kosten pro Ventil aufgrund der größeren Stückzahlen reduziert. Es sind keine verschiedenen Maschinen notwendig, sodass die Serienfertigung erleichtert wird, da beide Ventilvarianten in einer gemeinsamen Montageanlage gefertigt werden können. Aufgrund der geringeren Anzahl an Einzelteilen kann auch der Verwaltungsaufwand bei der Fertigung reduziert werden.

Insbesondere kann ein Bausatz bereitgestellt werden, der Bauteile sowohl für das oben beschriebene NC-Ventil als auch für ein NO-Ventil enthält. Dazu enthält der Bausatz neben den oben im Zusammenhang mit dem erfindungsgemäßen Kolbenschieberventil beschriebenen Teilen zusätzlich einen zweiten Magnetanker, der alternativ zu dem oben beschriebenen Magnetanker verwendet werden kann. Der zweite Magnetanker kann in dem Ventilgehäuse angeordnet und mit dem Schieber gekoppelt werden, sodass er durch Erzeugen eines elektromagnetischen Felds durch Bestromen einer Spule in dem Ventilgehäuse axial verlagerbar ist, sodass der Schieber durch Bestromen der Spule entgegen der Kraft der ersten Vorspanneinrichtung axial in eine Position verlagerbar ist, in welcher der Fluiddurchgang geschlossen ist. Mit anderen Worten kann so durch Weglassen der zweiten Vorspanneinrichtung und durch Einsatz des zweiten Magnetankers statt des oben beschriebenen Magnetankers ein NO-Ventil realisiert werden, welches die erste Vorspanneinrichtung und den gleichen Schieber und den gleichen Ventilkörper aufweist wie das oben beschriebene NC-Ventil.

In einer bevorzugten Ausgestaltung kann der zweite Magnetanker derart ausgebildet sein, dass mittels des Bausatzes ein NO-Ventil mit der eingangs erläuterten Fail-Safe-Funktion zusammengesetzt werden kann. Dazu ist der zweite Magnetanker zweiteilig ausgebildet und weist eine dritte Vorspanneinrichtung, insbesondere eine Feder, auf, welche derart angeordnet ist, dass sie einen ersten Teil und einen zweiten Teil des zweiten Magnetankers axial auseinander drängt. Der erste Teil ist mit einer Kolbenstange starr verbunden, welche mit dem Schieber koppelbar ist, wohingegen der zweite Teil auf der Kolbenstange axial verlagerbar ist. Dadurch kann der Schieber im unbestromten Zustand eine Position einnehmen, in welcher der Fluiddurchgang teilweise geöffnet ist. Bei einer Initialbestromung der Spule werden die beiden Teile des Magnetankers entgegen der Kraft der dritten Vorspanneinrichtung miteinander gekoppelt und der Schieber wird vorzugsweise axial in eine Position verlagert, in welcher der Fluiddurchgang geschlossen ist. Eine Position, in welcher der Fluiddurchgang maximal geöffnet ist, kann dann bei einer niedrigeren Grundbestromung (insbesondere bei einer Minimalbestromung) gehalten werden. Dann kann der Schieber bei steigender Bestromung entgegen der Kraft der ersten Vorspanneinrichtung axial in eine Position verlagert werden, in welcher der Fluiddurchgang geschlossen ist. Ohne Bestromung der Spule bewegt sich der Schieber dann wieder in die Position, in welcher der Fluiddurchgang teilweise geöffnet ist.

Der Bausatz kann also einerseits verwendet werden, um ein elektromagnetisch betätigtes Kolbenschieberventil in NC-Wirkweise zusammenzubauen, welches das Ventilgehäuse, hiervon insbesondere den Ventilkörper, den Schieber, die erste Vorspanneinrichtung, die zweite Vorspanneinrichtung und den ersten Magnetanker enthält. Andererseits kann der Bausatz verwendet werden, um ein elektromagnetisch betätigtes Kolbenschieberventil in NO-Wirkweise zusammenzubauen, welches das Ventilgehäuse, hiervon insbesondere den Ventilkörper, den Schieber, die erste Vorspanneinrichtung und den zweiten Magnetanker enthält. Die folgenden Ausführungen beziehen sich auf beide Varianten, sofern nicht anders angeben, insbesondere jedoch auf das eingangs beschriebene erfindungsgemäße Kolbenschieberventil in NC-Bauweise.

Der Schieber und der Magnetanker können als separate Bauteile ausgebildet sein. Separat bedeutet, dass der Schieber und der Magnetanker insbesondere nicht einstückig ausgebildet sind und nicht starr miteinander verbunden sind. Sie sind jedoch miteinander gekoppelt und können beispielsweise aneinandergrenzen und sich berühren oder über ein weiteres Element aneinandergekoppelt sein, so dass sie sich gemeinsam in dem Ventilgehäuse bewegen. Bei den meisten bekannten NC-Ventilen sind der Schieber und der Anker dagegen als ein Teil beziehungsweise als mechanisch fest verbundene Teile gefertigt. Vorzugsweise sind der Schieber und der Magnetanker zwischen der ersten Vorspanneinrichtung und der zweiten Vorspanneinrichtung eingespannt. Mit anderen Worten, der Schieber und der Magnetanker können über eine kraftschlüssige Verbindung miteinander gekoppelt sei und sich dadurch in axialer Richtung zusammen als eine Einheit bewegen.

Das Vorsehen des Magnetankers und des Schiebers als separate Bauteile erlaubt eine unabhängige Führung beziehungsweise Lagerung des Magnetankers und des Schiebers. Mit anderen Worten kann der Schieber von einem ersten Teil des Ventilgehäuses, insbesondere dem Ventilkörper, axial verschieblich geführt sein, und der Magnetanker kann von einem zweiten Teil des Ventilgehäuses, insbesondere einem Polrohr, axial verschieblich gelagert sein. Vorzugsweise sind der erste Teil des Ventilgehäuses und der zweite Teil des Ventilgehäuses verschiedene Bauteile des Ventilgehäuses, welche jedoch auf bekannte Art verbunden sein können.

In einer vorteilhaften Ausgestaltung sind der Schieber und der Magnetanker derart angeordnet, dass sie einen Versatz in radialer Richtung relativ zueinander erlauben. Zusätzlich oder gegebenenfalls alternativ können der Schieber und der Magnetanker derart angeordnet sein, dass sie einen winkligen Versatz relativ zueinander erlauben. Der Versatz bezieht sich dabei jeweils auf eine Mittellängsachse des Schiebers beziehungsweise des Magnetankers. Dabei können der Schieber und der Magnetanker über eine Gelenkverbindung gekoppelt sein, beispielsweise über ein Kugelelement. Vorteilhaft wird durch die Gelenkverbindung ein Schwenken sowie ein Verschieben in radialer Richtung erlaubt. Falls das Gelenk ein Kugelelement umfasst, kann dieses beispielsweise in einer Ausnehmung zumindest eines des Schiebers und des Magnetankers eingelassen sein. Andere geeignete Gelenkverbindungen, die ein Schwenken und/oder ein Verschieben des Schiebers und des Magnetankers relativ zueinander erlauben können vorgesehen werden, wie beispielsweise entsprechend geformte Grenzflächen des Schiebers beziehungsweise des Magnetankers.

Durch die Beweglichkeit des Schiebers und des Ankers relativ zueinander und die Entkoppelung der Lagerung des Schiebers und des Magnetankers können Toleranzketten in der Fertigung verkürzt und gleichzeitig eine robuste und reibungsarme Führung des Schiebers und des Magnetankers erreicht werden. Ein Achsversatz zwischen dem Schieber und dem Magnetanker hat keinen Einfluss auf Führung der beiden Teile. Außerdem kann durch die separate Ausgestaltung des Schiebers und des Magnetankers einfach der passende Magnetanker für die NC- bzw. NO-Variante gewählt werden oder der Magnetanker ausgetauscht werden.

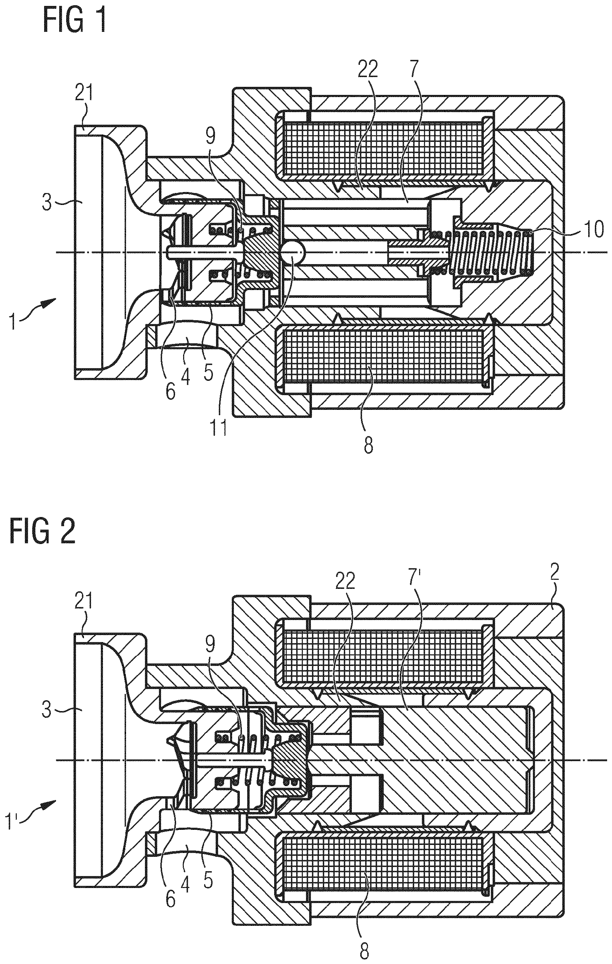

Die Erfindung wird im Folgenden mit Bezug auf die anliegenden Zeichnungen beschrieben. Die Zeichnungen sind lediglich schematische Darstellungen und die Erfindung ist nicht auf die speziellen dargestellten Ausführungsbeispiele beschränkt. Das erfindungsgemäße Ventil ist insbesondere in Fig. 1 dargestellt.

Fig. 1 zeigt eine Schnittdarstellung eines NC-Magnetventils im unbestromten Zustand.

Fig. 2 zeigt eine Schnittdarstellung eines NO-Magnetventils im unbestromten Zustand.

Fig. 3 zeigt eine Schnittdarstellung eines NO-Magnetventils mit Fail-Safe-Funktion im maximal geöffneten Zustand bei Grundbestromung.

In Fig. 1 ist ein Kolbenschieberventil 1 im Schnitt dargestellt. In dem in Fig. 1 dargestellten unbestromten Zustand ist das Ventil 1 geschlossen, d.h. es handelt sich um ein Kolbenschieberventil 1 in NC-Bauweise ("normally closed "). Das Ventil 1 weist ein Ventilgehäuse 2 mit einem Ventilkörper 21 mit einem ersten Fluidanschluss 3, welcher je nach Anwendung ein Fluideingang sein kann, und einem zweiten Fluidanschluss 4, welcher je nach Anwendung ein Fluidausgang sein kann, auf. In diesem Ausführungsbeispiel ist der Fluideingang 3 axial angeordnet und der Fluidausgang 4 umfasst mehrere radiale Öffnungen. Ein Schieber 5, welcher auch als Kolben oder Kolbenschieber bezeichnet werden kann und insbesondere hohl ausgebildet sein kann, ist axial verschieblich in dem Ventilgehäuse 2, insbesondere auf dem Ventilkörper 21, angeordnet, um einen Fluiddurchgang 6 zwischen dem ersten Fluidanschluss 3 und zweiten Fluidanschluss 4 zu öffnen und zu schließen, genauer gesagt einen freien Querschnitt des Fluiddurchgangs 6 zu regeln. Ein solcher Schieber ist beispielsweise aus EP 1 538 366 A1 bekannt. Es versteht sich, dass die vorliegende Erfindung nicht auf einen derartigen Schieberaufbau beschränkt ist, sondern dass auch andere Schieber- oder Kolbenkonstruktionen zur Regelung eines freien Querschnitts eines Fluiddurchgangs verwendet werden können.

Der Schieber 5 ist mit einem Magnetanker 7 gekoppelt, d.h. sie sind derart relativ zueinander in dem Ventilgehäuse 2 angeordnet, dass sie sich im Betrieb des Ventils 1 gemeinsam bewegen. Der Schieber 5 und der Magnetanker 7 sind nicht fest miteinander verbunden. Kräfte zwischen dem Schieber 5 und dem Magnetanker 7 werden stattdessen über eine Kugel 11 übertragen, welche sowohl einen Versatz der Längsachsen des Schiebers 5 und des Magnetankers 7 in radialer Richtung als auch - über einen Spalt zwischen dem Schieber 5 und dem Magnetanker 7 - einen winkligen Versatz des Schiebers 5 und des Magnetanker 7 erlaubt. Insbesondere im Betrieb des Ventils 1 bei axialer Verlagerung des Schiebers 5 und des Magnetankers 7 sind der Schieber 5 und der Magnetanker 7 derart relativ zueinander beweglich. Dadurch können der Schieber 5 und der Magnetanker 7 unabhängig voneinander geführt werden. Der Schieber 5 ist auf einem ersten Teil 21 des Ventilgehäuses 2 geführt, welches den Ventilkörper mit den Anschlüssen 3, 4 bildet, wohingegen der Magnetanker 7 in einem zweiten Teil 22 des Gehäuses, geführt ist, welches als Polrohr bezeichnet werden kann. Der Magnetanker 7 wird hier vorzugsweise über eine PTFE-Folie geführt, um die Reibung zu reduzieren.

Das Ventil 1 weist eine erste Vorspanneinrichtung in Form einer ersten Feder 9 und eine zweite Vorspanneinrichtung in Form einer zweiten Feder 10 auf. Die zweite Feder 10 stützt sich gegen das Ventilgehäuse 2 und den Magnetanker 7 ab und drängt den Magnetanker 7 und damit den Schieber 5 in eine Stellung, in welcher der Schieber 5 den Fluiddurchgang 6 verschließt. Auf der axial entgegengesetzten Seite des Magnetankers 7 stützt sich die erste Feder 9 gegen den Ventilkörper 21 und den Schieber 5 ab. Der Schieber 5 und der Magnetanker 7 sind somit zwischen der ersten Feder 9 und der zweiten Feder 10 eingespannt und damit kraftschlüssig verbunden. Die Kraft der ersten Feder 9 wirkt der Kraft der zweiten Feder 10 entgegen. Da die zweite Feder 10 jedoch stärker ausgebildet ist als die erste Feder 9, befindet sich der Schieber 5 im unbestromten Zustand der Spule 8 in der in Fig. 1 dargestellten Position, in welcher der Fluiddurchgang 6 verschlossen ist (NC-Prinzip).

Wird nun an die Spule 8 ein elektrischer Strom angelegt, erzeugt der Magnetanker 7 eine Kraft, welche in die gleiche Richtung wirkt wie die Kraft der ersten Feder 9 und entgegen der Kraft der zweiten Feder 10. Bei ausreichender Magnetkraft überwindet die Summe der Magnetkraft und der Kraft der ersten Feder 9 die Kraft der zweiten Feder 10, sodass sich der Schieber 5 in Öffnungsrichtung bewegt und den Fluiddurchgang 6 freigibt. Obwohl die erste Feder 9 für den Betrieb des NC-Ventils 1 nicht unbedingt notwendig ist, wird durch diesen Aufbau erreicht, dass der Schieber 5 mit der ersten Feder 9 und dem Ventilkörper 21 identisch für ein NO-Ventil 1' verwendet werden können, wie im Folgenden mit Bezug auf Fig. 2 beschrieben wird.

Fig. 2 zeigt ein Kolbenschieberventil 1' in NO-Bauweise, d.h. ein Ventil, welches im unbestromten Zustand der Spule 8 offen ist. Wie erwähnt ist es in weiten Teilen identisch zu dem zuvor beschriebenen NC-Ventil 1. Insbesondere sind der Ventilkörper 21 mit dem Fluiddurchgang 6 und den Anschlüssen 3, 4, der Schieber 5 und die erste Feder 9 identisch. Im Vergleich zu dem zuvor beschriebenen NC-Ventil 1 wurde die zweite Feder 10 weggelassen und ein Magnetanker 7' mit einem anderen Aufbau und einer anderen Grundposition gewählt. Der Magnetanker 7' ist derart in dem Ventilgehäuse 2 angeordnet, dass er im Vergleich zu dem zuvor beschriebenen NC-Ventil 1 eine Magnetkraft in die entgegengesetzte Richtung, das heißt entgegen der Kraft der ersten Feder 9 erzeugt. Aufgrund der fehlenden zweiten Feder 10, drängt die erste Feder 9 den Schieber 5 in Öffnungsrichtung, so dass der Fluiddurchgang 6 im unbestromten Zustand der Spule 8 geöffnet ist (NO-Prinzip). Beim Anlegen eines elektrischen Stroms an die Spule 8 wird der Schieber 5 entgegen der Kraft der ersten Feder 9 in Schließrichtung verschoben und der Fluiddurchgang 6 verschlossen.

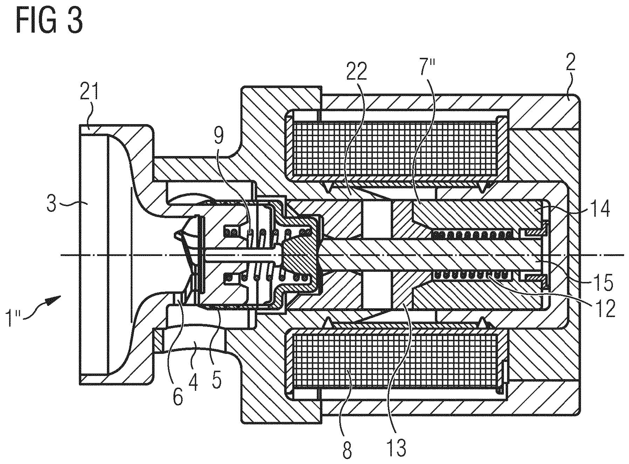

Fig. 3 zeigt ein Kolbenschieberventil 1" in NO-Bauweise, welches im Gegensatz zum dem in Fig. 2 dargestellten Ventil 1' eine Fail-Safe-Funktion aufweist. Der Magnetanker 7" weist einen ersten Teil 13 und einen zweiten Teil 14 auf, welche auf einer Kolbenstange 15 angeordnet sind, die sich gegen den Schieber 5 abstützt. Der Schieber 5 sowie die restliche Anordnung entspricht der des in Fig. 2 gezeigten Ventils 1'. Der erste Teil 13 des Magnetankers 7" ist mit der Kolbenstange 15 fest verbunden. Der zweite Teil 14 des Magnetankers 7" ist jedoch auf der Kolbenstange 15 axial verlagerbar. Eine Feder 12, welche nachfolgend als dritte Feder bezeichnet wird, ist zwischen den beiden Teilen 13, 14 des Magnetankers 7" angeordnet und drängt diese auseinander. Ohne Bestromung drängt die dritte Feder 12 die beiden Teile 13, 14 des Magnetankers 7" auseinander, so dass sich ein Gleichgewicht einstellt, bei welchem der Fluiddurchgang 6 teilweise geöffnet ist ("Fail-Safe-Stellung"). Bei Anlegen einer Bestromung an die Spule 8, insbesondere bei einer Initialbestromung, bewegt sich zunächst der erste Teil 13 des Magnetankers 7" entgegen der Kraft der dritten Feder 12 auf den zweiten Teil 14 des Magnetankers 7" zu, sodass die beiden Teile 13, 14 miteinander gekoppelt werden. Die Initialbestromung kann einer Maximalbestromung entsprechen, sodass der Schieber 5 initial in eine Position verlagert wird, in welcher der Fluiddurchgang 6 geöffnet ist. Die beiden Teile 13, 14 des Magnetankers 7" haften nun magnetisch aneinander, sodass bei einer Grundbestromung (Minimalbestromung) eine Position gehalten werden kann, in welcher der Fluiddurchgang 6 (auch durch die Kraft der ersten Feder 9) maximal geöffnet ist. Dieser Zustand ist in Fig. 3 dargestellt. Ausgehend von der Grundbestromung bewegen sich bei steigender Bestromung der erste und zweite Magnetanker 13, 14 nun im Verbund entgegen der Kraft der ersten Feder 9, so dass der Schieber 5 in Richtung einer Position bewegt wird, in welcher der Fluiddurchgang 6 geschlossen ist.

Der beschriebene Aufbau des NC-Ventils 1, des NO-Ventils 1' und des NO-Ventils 1" mit Fail-Safe-Funktion erlaubt das Bereitstellen eines Bausatzes, in welchem der Ventilkörper 21, der Schieber 5 und die erste Feder 9 identisch für ein NC-Ventil oder ein NO-Ventil verwendet werden können. Insbesondere der Schieber 5 und der Ventilkörper 21 mit dem Fluiddurchgang 6 und den Anschlüssen 3, 4 bilden die funktionsbestimmenden Hydraulikteile, welche komplex und teuer sind. Durch die gemeinsame Nutzung dieser Teile für beide Ventilvarianten kann die Fertigung beider Ventilvarianten vereinfacht und kostengünstiger gestaltet werden.

## Patentansprüche

1. Elektromagnetisch betätigtes Kolbenschieberventil (1), umfassend:
- ein Ventilgehäuse (2) mit einem ersten Fluidanschluss (3) und einem zweiten Fluidanschluss (4) und zumindest einem die beiden Fluidanschlüsse (3, 4) verbindenden Fluiddurchgang (6), sowie eine Spule (8),
- einen Schieber (5), der zum Regeln einer freien Querschnittsfläche des Fluiddurchgangs (6) in dem Ventilgehäuse (2) axial verlagerbar ist,
- eine erste Vorspanneinrichtung (9), welche sich derart gegen das Ventilgehäuse (2) abstützt, dass eine Kraft der ersten Vorspanneinrichtung (9) in eine Öffnungsrichtung wirkt, wobei der Schieber (5) bei Verlagerung in Öffnungsrichtung den Fluiddurchgang (6) zumindest teilweise freigibt, und
- eine zweite Vorspanneinrichtung (10), welche sich derart gegen das Ventilgehäuse (2) abstützt, dass eine Kraft der zweiten Vorspanneinrichtung (10) in eine zur Öffnungsrichtung entgegengesetzte Schließrichtung wirkt, wobei die erste und zweite Vorspanneinrichtung (9, 10) derart eingerichtet sind, dass der Schieber (5) im nicht bestromten Zustand der Spule (8) eine Position einnimmt, in welcher der Fluiddurchgang (6) geschlossen ist, und
- einen mit dem Schieber (5) gekoppelten Magnetanker (7), wobei der Schieber (5) mittels des Magnetankers (7) durch Erzeugen eines elektromagnetischen Felds durch Bestromen der Spule (8) in dem Ventilgehäuse (2) entgegen der Kraft der zweiten Vorspanneinrichtung (10) axial in eine Position verlagerbar ist, in welcher der Fluiddurchgang (6) zumindest teilweise geöffnet ist,
wobei im unbestromten Zustand der Spule (8) der Betrag der Kraft der zweiten Vorspannfeder (10) größer ist als der Betrag der Kraft der ersten Vorspannfeder (9).

2. Kolbenschieberventil nach Anspruch 1, wobei die erste und zweite Vorspanneinrichtung (9, 10) derart eingerichtet sind, dass bei Bestromen der Spule (8) mit einer vorgegebenen Stromstärke der Betrag der Summe der Kraft der ersten Vorspanneinrichtung (9) und einer durch das elektromagnetische Feld verursachten, auf den Magnetanker (7) wirkenden Kraft den Betrag der Kraft der zweiten Vorspanneinrichtung (10) übersteigt.

3. Kolbenschieberventil nach einem der Ansprüche 1 bis 2, wobei der Schieber (5) von einem ersten Teil (21) des Ventilgehäuses (2) axial verschieblich geführt ist und der Magnetanker (7) von einem zweiten Teil (22) des Ventilgehäuses (2) axial verschieblich geführt ist, wobei der erste Teil (21) des Ventilgehäuses (2) und der zweite Teil (22) des Ventilgehäuses (2) vorzugsweise verschiedene Bauteile des Ventilgehäuses (2) sind.

4. Kolbenschieberventil nach einem der Ansprüche 1 bis 3, wobei der Schieber (5) und der Magnetanker (7) als separate Bauteile ausgebildet sind.

5. Kolbenschieberventil nach einem der Ansprüche 1 bis 4, wobei der Schieber (5) und der Magnetanker (7) zwischen der ersten Vorspanneinrichtung (9) und der zweiten Vorspanneinrichtung (10) eingespannt sind.

6. Kolbenschieberventil nach einem der Ansprüche 1 bis 5, wobei der Schieber (5) und der Magnetanker (7) derart angeordnet sind, dass sie einen Versatz in radialer Richtung relativ zueinander erlauben.

7. Kolbenschieberventil nach einem der Ansprüche 1 bis 6, wobei der Schieber (5) und der Magnetanker (7) derart angeordnet sind, dass sie einen winkligen Versatz relativ zueinander erlauben.

8. Kolbenschieberventil nach einem der Ansprüche 1 bis 7, wobei der Magnetanker (7) und der Schieber (5) über eine Gelenkverbindung gekoppelt sind.

9. Kolbenschieberventil nach Anspruch 8, wobei die Gelenkverbindung ein Kugelelement (11) umfasst.

10. Stoßdämpfer für ein Fahrzeug, umfassend ein elektromagnetisch betätigtes Kolbenschieberventil (1, 1') nach einem der Ansprüche 1 bis 9.

## Claims

1. An electromagnetically actuated piston slide valve (1), comprising:
- a valve housing (2) with a first fluid connector (3) and a second fluid connector (4) and at least one fluid passage (6) connecting the two fluid connectors (3, 4), as well as a coil (8),
- a slide (5) which is axially displaceable in the valve housing (2) for regulating a free cross-sectional area of the fluid passage (6),
- a first biasing device (9) which rests against the valve housing (2) in such a manner that a force of the first biasing device (9) acts in an opening direction, wherein the slide (5) at least partially releases the fluid passage (6) upon displacement in the opening direction, and
- a second biasing device (10) which rests against the valve housing (2) in such a manner that a force of the second biasing device (10) acts in a closing direction opposite to the opening direction, wherein the first and the second biasing device (9, 10) are adapted such that, in the electrically unenergized state of the coil (8), the slide (5) adopts a position in which the fluid passage (6) is closed, and
- a magnetic armature (7) coupled with the slide (5), wherein, by means of the magnetic armature (7), by producing an electromagnetic field through electrically energizing the coil (8), the slide (5) is axially displaceable in the valve housing (2) against the force of the second biasing device (10) into a position in which the fluid passage (6) is at least partially opened,
wherein, in the electrically unenergized state of the coil (8), the absolute value of the force of the second biasing spring (10) is greater than the absolute value of the force of the first biasing spring (9).

2. The piston slide valve according to claim 1, wherein the first and the second biasing device (9, 10) are adapted such that, upon electrically energizing the coil (8) with a predetermined current intensity, the absolute value of the sum of the force of the first biasing device (9) and of a force caused by the electromagnetic field and acting on the magnetic armature (7) exceeds the absolute value of the force of the second biasing device (10).

3. The piston slide valve according to any of claims 1 to 2, wherein the slide (5) is guided in axially shiftable manner by a first part (21) of the valve housing (2) and the magnetic armature (7) is guided in axially shiftable manner by a second part (22) of the valve housing (2), wherein the first part (21) of the valve housing (2) and the second part (22) of the valve housing (2) are preferably different components of the valve housing (2).

4. The piston slide valve according to any of claims 1 to 3, wherein the slide (5) and the magnetic armature (7) are configured as separate components.

5. The piston slide valve according to any of claims 1 to 4, wherein the slide (5) and the magnetic armature (7) are clamped between the first biasing device (9) and the second biasing device (10).

6. The piston slide valve according to any of claims 1 to 5, wherein, wherein the slide (5) and the magnetic armature (7) are arranged such that they allow for an offset relative to each other in the radial direction.

7. The piston slide valve according to any of claims 1 to 6, wherein the slide (5) and the magnetic armature (7) are arranged such that they allow for an angular offset relative to each other.

8. The piston slide valve according to any of claims 1 to 7, wherein the magnetic armature (7) and the slide (5) are coupled via a hinge connection.

9. The piston slide valve according to claim 8, wherein the hinge connection comprises a ball element (11).

10. A shock absorber for a vehicle, comprising an electromagnetically actuated piston slide valve (1, 1') according to any of claims 1 to 9.

## Revendications

1. Vanne à tiroir-piston (1) actionnée électromagnétiquement, comprenant
- un boîtier de vanne (2) ayant un premier raccordement de fluide (3) et un deuxième raccordement de fluide (4) et au moins un passage de fluide (6) reliant les deux raccordements de fluide (3, 4), ainsi qu'une bobine (8),
- un tiroir (5) qui, pour régler une surface libre de section transversale du passage de fluide (6), peut être déplacé axialement dans le boîtier de vanne (2),
- un premier dispositif de précontrainte (9) qui prend de telle façon appui contre le boîtier de vanne (2) qu'une force du premier dispositif de précontrainte (9) agit dans une direction d'ouverture, cependant que le tiroir (5), lors d'un déplacement dans la direction d'ouverture, libère au moins partiellement le passage de fluide (6), et
- un deuxième dispositif de précontrainte (10) qui prend de telle façon appui contre le boîtier de vanne (2) qu'une force du deuxième dispositif de précontrainte (10) agit dans une direction de fermeture opposée à la direction d'ouverture, cependant que le premier et le deuxième dispositif de précontrainte (9, 10) sont conçus de telle façon que le tiroir (5), à l'état non alimenté en courant de la bobine (8), adopte une position dans laquelle le passage de fluide (6) est fermé, et
- une armature d'aimant (7) couplée au tiroir (5), cependant que le tiroir (5) au moyen de l'armature d'aimant (7), par génération d'un champ électromagnétique par alimentation en courant de la bobine (8), peut être déplacé axialement dans le boîtier de vanne (2) contre la force du deuxième dispositif de précontrainte (10) dans une position dans laquelle le passage de fluide (6) est au moins partiellement ouvert,
cependant que, à l'état non alimenté en courant de la bobine (8), la valeur absolue de la force du deuxième ressort de précontrainte (10) est supérieure à la valeur absolue de la force du premier ressort de précontrainte (9).

2. Vanne à tiroir-piston (1) selon la revendication 1, cependant que le premier et le deuxième dispositif de précontrainte (9, 10) sont conçus de telle façon , lors de l'alimentation en courant de la bobine (8) à une intensité de courant prédéterminée, la valeur absolue de la somme de la force du premier ressort de précontrainte (9) et d'une force engendrée par le champ électromagnétique et agissant sur l'armature d'aimant (7) dépasse la valeur absolue de la force du deuxième ressort de précontrainte (10).

3. Vanne à tiroir-piston selon une des revendications de 1 à 2, cependant que le tiroir (5) est guidé de manière axialement déplaçable par une première partie (21) du boîtier de vanne (2), et que l'armature d'aimant (7) est guidée de manière axialement déplaçable par une deuxième partie (22) du boîtier de vanne (2), cependant que la première partie (21) du boîtier de vanne (2) et la deuxième partie (22) du boîtier de vanne (2) sont de préférence des composants du boîtier de vanne (2) différents.

4. Vanne à tiroir-piston selon une des revendications de 1 à 3, cependant que le tiroir (5) et l'armature d'aimant (7) sont réalisés sous forme de composants distincts.

5. Vanne à tiroir-piston selon une des revendications de 1 à 4, cependant que le tiroir (5) et l'armature d'aimant (7) sont abloqués entre le premier dispositif de précontrainte (9) et le deuxième dispositif de précontrainte (10).

6. Vanne à tiroir-piston selon une des revendications de 1 à 5, cependant que le tiroir (5) et l'armature d'aimant (7) sont agencés de telle façon qu'ils permettent un décalage en direction radiale relativement l'un à l'autre.

7. Vanne à tiroir-piston selon une des revendications de 1 à 6, cependant que le tiroir (5) et l'armature d'aimant (7) sont agencés de telle façon qu'ils permettent un décalage angulaire relativement l'un à l'autre.

8. Vanne à tiroir-piston selon une des revendications de 1 à 7, cependant que l'armature d'aimant (7) et le tiroir (5) sont couplés par l'intermédiaire d'une liaison articulée.

9. Vanne à tiroir-piston selon la revendication 8, cependant que la liaison articulée comprend un élément sphérique (11).

10. Amortisseur pour un véhicule, comprenant une vanne à tiroir-piston (1, 1') actionnée électromagnétiquement selon une des revendications de 1 à 9.
